# EUROPÄISCHE PATENTSCHRIFT

(11) **EP 3 329 178 B1**
(45) Veröffentlichungstag und Bekanntmachung des Hinweises auf die Patenterteilung: **21.04.2021**
(21) Anmeldenummer: 16753570.7
(22) Anmeldetag: 07.07.2016
(51) Int. Cl.: F21S 8/00, F21V 8/00, F21Y 103/10, F21Y 115/10

(54) **LICHTLEITERELEMENT**
OPTICAL WAVEGUIDE ELEMENT
ÉLÉMENT GUIDE DE LUMIÈRE

(30) Priorität: 31.07.2015 DE 202015104012 U
(43) Veröffentlichungstag der Anmeldung: 06.06.2018
(73) Patentinhaber: Zumtobel Lighting GmbH, 6850 Dornbirn (AT); Zumtobel Lighting GmbH (DE), 32657 Lemgo (DE)
(72) Erfinder: KELLER, Katharina, 88161 Lindau (DE); DÜNSCHEDE, Elmar, 33100 Paderborn (DE); VON KLOEDEN, Burkhard, 32760 Detmold (DE)
(74) Vertreter: Thun, Clemens
(86) Internationale Anmeldenummer: PCT/AT2016/060004
(87) Internationale Veröffentlichungsnummer: WO 2017/020053

(56) Entgegenhaltungen:
- EP-A1- 2 009 615
- EP-A1- 2 428 826
- EP-A2- 2 573 455
- DE-U1-202009 018 867

## Beschreibung

Die vorliegende Erfindung betrifft ein Lichtleiterelement, welches sich entlang einer Längsrichtung erstreckt und dazu ausgebildet ist, Licht, welches an zumindest einer Schmalseite des Lichtleiterelements in dieses eingekoppelt wird, über eine quer zu dieser Schmalseite ausgerichtete Lichtabstrahlfläche abzugeben. Ferner betrifft die vorliegende Erfindung eine Anordnung zur Lichtabgabe, bei der ein entsprechendes Lichtleiterelement zum Einsatz kommt.

Flächige Lichtleiterelemente finden in der Beleuchtungstechnologie vielfach Verwendung. Mit Hilfe derartiger Lichtleiterelemente können beispielsweise große leuchtende Flächen realisiert werden, welche trotz des Einsatzes nur weniger Lichtquellen in einer im Wesentlichen homogenen, gleichmäßigen Helligkeit erscheinen. Die Funktion dieser flächigen Lichtleiterelemente beruht dabei darauf, dass über eine verhältnismäßig kleine Seitenfläche des Lichtleiterelements, bspw. über dessen Stirn- oder Umfangsfläche(n) Licht in das Lichtleiterelement eingekoppelt und in diesem mittels Mehrfachreflexionen weitergeleitet wird. Durch spezielle Maßnahmen - sog. Auskoppelstrukturen - wird dann das Licht an bestimmten Stellen ausgekoppelt, also derart beeinflusst, dass es das Lichtleiterelement verlassen kann, wobei durch eine entsprechende Anordnung und Formgebung dieser Auskoppelstrukturen insbesondere die Helligkeitsverteilung an der sog. Lichtabstrahlfläche des Lichtleiterelements beeinflusst werden kann. Es besteht dabei die Möglichkeit, nicht nur gleichmäßig leuchtende größere Flächen zu realisieren sondern darüber hinaus auch mit deren Hilfe gezielt das Licht derart abzustrahlen, dass es für bestimmte Anwendungszwecke wie bspw. die Beleuchtung von Arbeitsplätzen oder dergleichen effizient genutzt werden kann.

Die vorliegende Erfindung betrifft dabei insbesondere die Aufgabenstellung, Licht asymmetrisch abzugeben. Die oben beschriebenen bekannten Lichtleiterelemente sind üblicherweise derart ausgebildet, dass das Licht im Hinblick auf eine Mittelebene mit einer symmetrischen Lichtverteilung, also zu gleichen Teilen in beide Richtungen abgegeben wird. Ist hingegen gewünscht, dass das Licht durch das Lichtleiterelement asymmetrisch abgegeben, also zu einem überwiegenden Teil in eine bestimmte Richtung abgestrahlt wird, so sind hierfür aus dem Stand der Technik im Wesentlichen zwei Lösungen bekannt.

Zum einen kann eine asymmetrische Lichtabgabe bspw. dadurch erzielt werden, dass Licht lediglich von einer (Schmal-)Seite her in das Lichtleiterelement eingestrahlt wird. Auch wenn zumindest ein Teil des Lichts an der gegenüberliegenden Seite des Lichtleiterelements reflektiert wird, hat dies doch zur Folge, dass das von dem Lichtleiterelement ausgekoppelte und abgestrahlte Licht primär in eine Richtung ausgerichtet ist, die der ursprünglichen Lichtabstrahlrichtung der Lichtquelle, über die Licht in das Lichtleiterelement eingestrahlt wurde, entspricht. Diese Vorgehensweise hat allerdings zur Folge, dass bei großflächigen Lichtleiterelementen üblicherweise Bereiche des Lichtleiterelements, welche sich in der Nähe der Lichtquelle bzw. der Lichtquellen befinden, heller erscheinen als entfernter liegende Bereiche. Eine gleichmäßig hell leuchtende Fläche, wie dies üblicherweise bei Beleuchtungsanwendungen erwünscht ist, kann auf diese Weise also eher nicht erzielt werden. Ferner bestehen bei dieser Vorgehensweise nur geringe Möglichkeiten, Einfluss auf die letztendlich erzielbare Lichtverteilung zu nehmen.

Alternativ hierzu ist auch bekannt, an der Lichtaustrittsfläche des Lichtleiterelements zusätzliche lichtbrechende Elemente oder Strukturen vorzusehen, die zu der gewünschten Asymmetrie bei der Lichtverteilung führen. Bekannt ist bspw. Prismenstrukturen einzusetzen, die entweder unmittelbar an der Lichtaustrittsfläche des Lichtleiterelements ausgebildet oder als separate Prismenplatte anliegend an der Lichtaustrittsfläche des Lichtleiterelements angeordnet sind. Mit Hilfe derartiger Prismenplatten kann zwar sehr effektiv die Richtungsabhängigkeit der Lichtabgabe beeinflusst werden, allerdings führen derartige Strukturen zwangsläufig zu nichtebenen Lichtabstrahlflächen der gesamten Anordnung. Diese bringen bspw. den Nachteil mit sich, dass sich leichter Schmutz an der Oberfläche der Anordnung ansetzt und diese auch weniger gut zu reinigen ist.

Aus der EP 2 573 455 A2 ist eine Beleuchtungsanordnung mit einem plattenförmigen Lichtleiter bekannt. Bei dieser Anordnung wird über eine schmale randseitige Fläche des Lichtleiters Licht einer LED-Lichtquelle in den Lichtleiter eingestrahlt. An einer der beiden großen Oberflächen des Lichtleiters wird das Licht dann durch Strukturelemente umgelenkt und schließlich verlässt das Licht den Lichtleiter über die der genannten Oberfläche gegenüberliegende Oberfläche, und zwar mit einer asymmetrischen Richtungsverteilung.

Aus der EP 2 009 615 A1 ist ein Lichtleiterelement bekannt, das dazu ausgebildet ist, Licht, das über eine Schmalseite eingestrahlt wird, über eine Flachseite abzugeben. Auf der, dieser Flachseite gegenüberliegenden Seite sind Auskoppelstrukturen in Form von Ausnehmungen gebildet.

In der DE 20 2009 018 867 U1 ist ein Lichtleiter mit einer Lichtleiterplatte, auf welcher eine Vielzahl an kegelförmigen Lichtauskoppelstrukturen matrizenförmig angeordnet sind, gezeigt.

Der vorliegenden Erfindung liegt deshalb ausgehend von dem oben genannten Stand der Technik die Aufgabenstellung zugrunde, eine neue Möglichkeit zur Realisierung eines Lichtleiterelements mit entsprechenden asymmetrischen Lichtabstrahleigenschaften zur Verfügung zu stellen, bei dem die oben beschriebenen Nachteile vermieden werden.

Die Aufgabe wird durch ein Lichtleiterelement, welches die Merkmale des Anspruchs 1 aufweist, gelöst. Vorteilhafte Weiterbildungen der Erfindung sind Gegenstand der abhängigen Ansprüche.

Kerngedanke der erfindungsgemäßen Lösung ist es, die für die Auskopplung des Lichts aus dem Lichtleiterelement verantwortlichen Strukturen nicht an der eigentlichen Lichtabstrahlfläche des Lichtleiterelements, sondern stattdessen an der der Lichtabstrahlfläche gegenüberliegenden Rückseite auszubilden. Diese sind nunmehr derart ausgebildet, dass sie nicht nur auftreffendes Licht derart umlenken, dass es das Lichtleiterelement über dessen Lichtabstrahlfläche verlassen kann, sondern sie beeinflussen das Licht zusätzlich auch noch derart, dass die gewünschte asymmetrische Lichtverteilung erzielt wird.

Erfindungsgemäß wird dementsprechend ein Lichtleiterelement vorgeschlagen, welches sich entlang einer Längsrichtung erstreckt und dazu ausgebildet ist, Licht, welches an zumindest einer eine Lichteinkoppelfläche bildenden Schmalseite des Lichtleiterelements in dieses eingekoppelt wird, über eine senkrecht zur Lichteinkoppelfläche ausgerichtete Flachseite, welche eine Lichtabstrahlfläche des Lichtleiterelements bildet, abzugeben, wobei an einer der Lichtabstrahlfläche gegenüberliegenden Rückseite des Lichtleiterelements Auskoppelstrukturen ausgebildet sind, welche auftreffendes Licht derart umlenken, dass dieses die Lichtabstrahlfläche bzgl. einer Ebene, welche senkrecht zur Lichtabstrahlfläche und vorzugsweise parallel zur Längsrichtung ausgerichtet ist, mit einer asymmetrischen Lichtverteilung verlässt.

Die erfindungsgemäße Lösung führt unmittelbar zur Vermeidung der oben erwähnten Probleme beim Stand der Technik. Dadurch nämlich, dass nunmehr die Auskoppelstrukturen an der Rückseite des Lichtleiterelements und insbesondere bereits derart ausgebildet sind, dass sie die angestrebte asymmetrische Lichtverteilung bewirken, besteht nunmehr die Möglichkeit, die eigentliche Lichtabstrahlfläche des Lichtleiterelements in der gewünschten Weise, also bspw. vollkommen plan bzw. eben auszugestalten. Dies führt zu einem positiven Erscheinungsbild der gesamten Anordnung, wobei jedoch trotz allem die gewünschten Lichtabstrahleigenschaften erzielt werden.

Dabei sind die Lichtauskoppelstrukturen durch Ausnehmungen gebildet, die in der Rückseite des Lichtleiterelements ausgebildet sind. Erfindungsgemäß weisen die Ausnehmungen eine Kegelform auf, wobei dies Kegelform gegenüber der Ebene, bzgl. der die oben erwähnte asymmetrische Lichtverteilung erzielt werden soll, geneigt ist. Eine Umlenkung des auf diese Auskoppelstrukturen auftreffenden Lichts erfolgt dabei insbesondere mittels Totalreflexion, so dass nicht zwingend weitere Maßnahmen zur Lichtbeeinflussung erforderlich sind, auch wenn es durchaus denkbar wäre, die Umfangsflächen dieser Ausnehmungen zusätzlich zu verspiegeln bzw. mit einem reflektierenden Material zu versehen, um evtl. die Effizienz des Lichtleiterelements weiter zu steigern.

Das erfindungsgemäße Lichtleiterelement, welches bspw. aus PMMA, PC oder aus Silikon bestehen kann, weist dabei vorzugsweise eine längliche, quaderförmige Grundform auf, wobei dann die Lichteinkopplung über eine Längsseite des Lichtleiterelements erfolgt. Die Lichtauskoppelstrukturen sind dabei in Längsrichtung hintereinander angeordnet.

Erfindungsgemäß wird ferner eine Anordnung zur Lichtabgabe mit einem Lichtleiterelement vorgeschlagen, welches wie oben beschrieben ausgeführt ist, wobei darüber hinaus auch Mittel zur Lichterzeugung vorgesehen sind, welche Licht an zumindest einer Schmalseite des Lichtleiterelements in dieses einkoppeln. Die Mittel zur Lichterzeugung können dabei insbesondere LEDs aufweisen, welche an der Schmalseite des Lichtleiterelements angeordnet sind.

Nachfolgend soll die Erfindung anhand der beiliegenden Zeichnung näher erläutert werden. Es zeigen:
- Figur 1: eine schematische Darstellung einer denkbaren Anwendung des erfindungsgemäßen Lichtleiterelements;
- Figur 2: eine größere Ansicht des erfindungsgemäßen Lichtleiterelements;
- Figur 3: eine Schnittdarstellung des erfindungsgemäßen Lichtleiterelements;
- Figur 4: eine erste Möglichkeit zur Gestaltung der erfindungsgemäßen Auskoppelstrukturen und
- Figur 5: eine zweite Möglichkeit zur Realisierung der Auskoppelstrukturen.

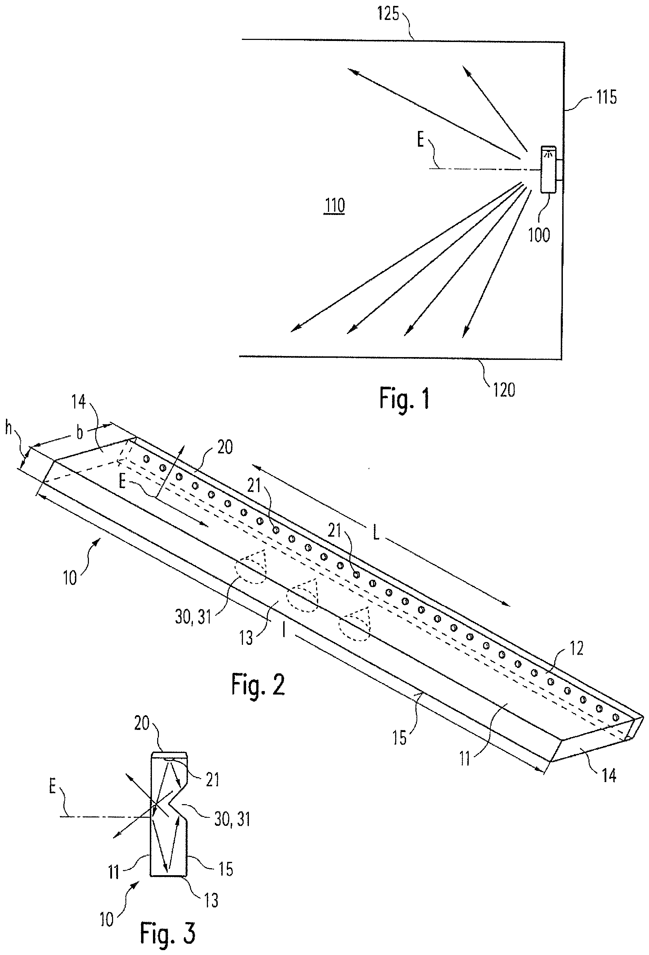

Als denkbares Anwendungsbeispiel für die erfindungsgemäße Lösung ist in Figur 1 eine allgemein mit dem Bezugszeichen 100 versehene Leuchte dargestellt, welche an der Wand 115 eines zu beleuchtenden Raums 110 parallel zu dieser angeordnet ist. Im vorliegenden Anwendungsfall ist die Leuchte 100 also vertikal orientiert, wobei eine asymmetrische Lichtabgabe durchaus auch bei horizontal orientierten Leuchten gewünscht sein kann. Die Leuchte 100 kann wie dargestellt in einem kleinen Abstand zu der Oberfläche der Wand 115 angeordnet sein, alternativ hierzu wäre allerdings auch eine unmittelbar an der Wand 115 anliegende Montage oder sogar eine mit der Wandoberfläche bündige Einbaumontage denkbar. In allen diesen Fällen bildet die Leuchte 100 eine vertikal ausgerichtete Lichtabstrahlfläche, über die wie schematisch dargestellt Licht abgegeben wird.

Die Leuchte 100 soll im vorliegenden Fall tatsächlich der Raumbeleuchtung dienen, also einerseits Licht schräg nach unten zur Beleuchtung des Bodens 120 abgeben. Im Sinne einer Indirektbeleuchtung soll zusätzlich allerdings auch die Decke 125 des Raums 115 erhellt werden, weshalb ein anderer Teil des Lichts - wie angedeutet - auch schräg nach oben abgegeben werden soll. Da jedoch zu Beleuchtungszwecken primär eine direkte Beleuchtung schräg unterhalb der Leuchte 100 befindender Bereiche angestrebt wird, soll bzgl. der schematisch angedeuteten Ebene E, die horizontal ausgerichtet ist, eine Asymmetrie hinsichtlich der Lichtverteilung vorliegen, derart, dass vermehrt Licht nach unten und ein geringerer Teil des Lichts nach oben abgegeben wird.

Ein Einsatz derartiger Leuchten ist bspw. in längeren Gängen oder dergleichen sinnvoll, bei denen mit Hilfe derartiger Leuchten längliche leuchtende Bänder erzielt werden, durch welche einerseits die Bodenfläche des Gangs ausreichend beleuchtet wird, andererseits jedoch zusätzlich auch die Decke aufgehellt wird, um diese nicht übermäßig dunkel erscheinen zu lassen. Vergleichbare Anforderungen hinsichtlich der Lichtabgabe liegen aber bspw. auch in Tunnels oder dergleichen vor, so dass auch hier eine entsprechende Nutzung der vorliegenden Erfindung sinnvoll wäre. Schließlich kann - wie bereits oben erwähnt - eine asymmetrische Lichtabgabe auch bei horizontal ausgerichteten Leuchten wünschenswert sein.

Die nähere Ausgestaltung der erfindungsgemäßen Leuchte 100 kann der perspektivischen Darstellung von Figur 2 sowie der Schnittdarstellung von Figur 3 entnommen werden.

Hauptbestandteil der Leuchte ist ein längliches Lichtleiterelement 10, dessen Dimensionen in Figur 2 nur beispielhaft dargestellt sind. Es weist insbesondere eine quaderförmige Grundform auf und erstreckt sich entlang der angedeuteten Längsrichtung L, wobei insbesondere die Länge 1 und Breite b frei gewählt werden können. Die Höhe bzw. Tiefe h des Lichtleiterelements 10 liegt vorteilhafterweise im Bereich zwischen etwa 2 und 5 cm.

Wie bei Lichtleiterelementen üblich, ist auch im vorliegenden Fall vorgesehen, dass über eine Flachseite, hier über die mit dem Bezugszeichen 11 versehene Flachseite des Lichtleiterelements 10 das Licht abgegeben wird. Die in Figur 2 gezeigte Oberseite des Lichtleiterelements 10, die bei der in Figur 1 gezeigten Montagesituation der der Wand abgewandten Seite entspricht, bildet in diesem Fall also die Lichtabstrahlfläche. Die Lichteinkopplung hingegen erfolgt über eine schmälere Umfangsfläche des Lichtleiterelements 10, im vorliegenden Fall über die Längsseite 12, welche in Figur 1 der Oberseite des Lichtleiterelements 10 entspricht. An dieser Längsseite 12, welche also die sog. Lichteinkoppelfläche bildet, sind Mittel zur Lichtabgabe angeordnet, die im vorliegenden Fall durch eine oder mehrere LED-Platinen 20 mit darauf angeordneten LEDs 21 gebildet werden. Die LEDs 21 sind dabei unmittelbar der Lichteinkoppelfläche des Lichtleiterelements 10 zugewandt angeordnet, derart, dass das Licht der LEDs 21 nahezu vollständig in das Lichtleiterelement 10 eingestrahlt wird. Ggf. können hierfür zusätzliche - nicht näher dargestellte - Maßnahmen vorgesehen sein, um die Lichteinkopplung zu verbessern bzw. den Verlust von Licht zu vermeiden. Denkbar wäre bspw., die Seitenfläche 12 in geeigneter Weise zu strukturieren und/oder die Oberflächen der Platinen 20 reflektierend auszubilden bzw. zusätzliche Reflektoren einzusetzen. Alternativ zu der dargestellten Ausführungsform könnten die Leuchtmittel allerdings auch anderweitig ausgebildet sein, solange eine effiziente Lichteinkopplung im Wesentlichen über die gesamte Länge des Lichtleiterelements 10 hinweg erzielt werden kann.

Wie bei Lichtleiterelementen üblich, erfolgt dann eine Verteilung des längsseitig eingekoppelten Lichts dadurch, dass dieses von den verschiedenen Oberflächen reflektiert wird. Üblicherweise handelt es sich hierbei um Totalreflexionen, wobei ggf. jedoch einige Seitenflächen des Lichtleiterelements 10 auch zusätzlich verspiegelt sein könnten. Dies gilt insbesondere für die der Lichteinkoppelfläche 12 gegenüberliegende Längsseite 13 sowie die beiden Stirnseiten 14, um an diesen Flächen einen unerwünschten Lichtaustritt und dementsprechend einen Verlust für die eigentlich angestrebte Lichtabgabe zu vermeiden.

Eine Lichtauskopplung erfolgt hingegen dann, wenn ein Lichtstrahl auf spezielle Lichtauskoppelstrukturen trifft, die - wie nachfolgend noch näher erläutert - erfindungsgemäß im Bereich der der Lichtaustrittsfläche gegenüberliegenden Rückseite 15 des Lichtleiterelements 10 ausgebildet sind und einen auftreffenden Lichtstrahl derart umlenken, dass dieser die Lichtaustrittsfläche 11 des Lichtleiterelements 10 verlassen kann. Die Besonderheit der erfindungsgemäßen Lösung besteht in der Ausgestaltung der Lichtauskoppelstrukturen, die nachfolgend näher beschrieben werden soll.

Eine erste Besonderheit liegt dabei darin, dass die Lichtauskoppelstrukturen 30 im vorliegenden Fall durch Ausnehmungen 31 gebildet werden, welche von der Rückseite 15 her in das Lichtleiterelement 10 ragen, wie insbesondere der Schnittdarstellung von Figur 3 entnommen werden kann. Das aus einem transparenten Material, bspw. PMMA, PC oder Silikon bestehende Lichtleiterelement 10 ist also massiv ausgebildet und weist lediglich die von der Rückseite 15 her nach innen ragenden Ausnehmungen 31 auf, welche die Lichtauskoppelstrukturen bilden 30. Auf diese Ausnehmungen 31 auftreffende Lichtstrahlen werden - wiederum bevorzugt mittels Totalreflexion - umgelenkt und können wie dargestellt das Lichtleiterelement 10 an dessen Lichtaustrittsfläche 11 verlassen. Auch hier wäre ggf. denkbar, die Umfangsflächen der Ausnehmungen 31, welche für die Lichtumlenkung und damit für die Auskopplung des Lichts verantwortlich sind, zusätzlich zu verspiegeln bzw. die Ausnehmungen 31 mit einem reflektierenden Material zu füllen.

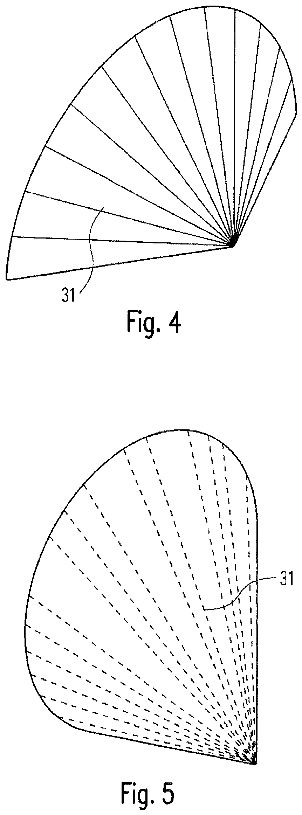

Eine zweite Besonderheit dieser Auskoppelstrukturen 30 besteht ferner darin, dass diese derart ausgebildet sind, dass mit ihrer Hilfe im Rahmen der Lichtauskopplung die oben erwähnte asymmetrische Lichtabgabe bzgl. der die Lichtaustrittsfläche 11 senkrecht und mittig schneidende Ebene E erzielt wird. In Längsrichtung L hingegen soll idealerweise eine symmetrische Aufteilung des Lichts vorliegen, die dazu führt, dass sich der beleuchtete Bereich an der Bodenfläche 120 oder der Decke 125 des Raums 110 über eine größere Länge hinweg erstreckt als die Leuchte 100 selbst lang ist. Zwei denkbare Ausführungsformen für die Lichtauskoppelstrukturen, mit deren Hilfe diese spezielle Charakteristik hinsichtlich der Lichtabgabe erzielt wird, sollen nachfolgend anhand der Figuren 4 und 5 näher erläutert werden.

Beide Figuren 4 und 5 zeigen dabei schematisch eine einzelne Ausnehmung 31 von der Oberseite her, also etwa aus Sicht der Lichtquellen bzw. der Lichteinkoppelfläche.

Beide dargestellten Varianten der Ausnehmungen 31 in den Figuren 4 und 5 zeichnen sich hierbei dadurch aus, dass sie zumindest abschnittsweise einer Kegelform entsprechen. Dies gilt insbesondere für den der Lichteinkoppelfläche 12, also den Lichtquellen 21 zugewandten Bereich der Ausnehmung 31. Wie anhand des in Figur 3 schematisch angedeuteten Strahlenverlaufs gezeigt ist, hat diese Kegelform zur Folge, dass von der Oberseite her auf die Ausnehmung 31 auftreffende Lichtstrahlen, also Lichtstrahlen, die in erster Linie unmittelbar auf die Ausnehmung 31 treffen, reflektiert und derart abgelenkt werden, dass sie die Lichtabstrahlfläche 11 des Lichtleiterelements 10 verlassen. Die Kegelform, also die zumindest abschnittsweise Rotationssymmetrie der Ausnehmung 31 hat dabei zur Folge, dass in Längsrichtung L des Lichtleiterelements die oben erwähnte bevorzugte symmetrische Aufspaltung des Lichts erzielt wird.

Ein anderer Teil des Lichts hingegen, der zunächst auf die der Lichteintrittsfläche gegenüberliegende Unterseite 13 des Lichtleiterelements 10 trifft, wird hier reflektiert und trifft dann auf den unteren Bereich der Ausnehmung 31. Auch hier erfolgt wiederum eine Umlenkung derart, dass nunmehr eine Lichtabgabe eher nach oben hin erfolgt. Offensichtlich betrifft dies jedoch einen geringeren Anteil des von der LED 21 in das Lichtleiterelement eingekoppelten Lichts, so dass sich nahezu zwangsläufig die oben erwähnte gewünschte Asymmetrie hinsichtlich der Ebene E ergibt. Der untere Bereich der Ausnehmung 31 kann dabei durchaus eine andere Form aufweisen, als der der Lichtquelle zugewandte Bereich. Hier ist also nicht zwingend eine Symmetrie gegenüber einer horizontalen Ebene (bezogen auf die in Figur 1 gezeigte Montagesituation) erforderlich, wobei jedoch auch dieser untere Bereich vorzugsweise derart ausgeführt ist, dass eine symmetrische Verteilung in Längsrichtung L des Lichtleiterelements 10 erzielt wird.

Gleiche Voraussetzungen liegen auch bei der in Figur 5 gezeigten Ausführungsform der Ausnehmung 31 vor. In diesem Fall bildet die Ausnehmung 31 einen Kegel, der jedoch im Vergleich zur Senkrechten zur Rückseite des Lichtleiterelements 10 geneigt orientiert ist. Für die Ausnehmung 31 ergibt sich in diesem Fall insgesamt die Form eines Kegels, dessen Bodenfläche jedoch schräg abgeschnitten ist. Auch in diesem Fall wird jedoch wiederum eine Beeinflussung des Lichts in der oben beschriebenen Weise erzielt, um die asymmetrische Lichtabgabe bzgl. der Ebene E zu erzielen.

Die Auskoppelstrukturen 30 sind dann in Längsrichtung L verteilt an der Rückseite 15 des Lichtleiterelements 10 ausgebildet (wobei aus Gründen der Übersichtlichkeit in Figur 2 lediglich einige wenige Ausnehmungen 31 schematisch gezeigt sind) und bewirken insgesamt die angestrebte Beeinflussung des eingekoppelten Lichts. Hierdurch wird trotz einer ebenen bzw. planen Lichtaustrittsfläche eine Lichtverteilung hinsichtlich des abgegebenen Lichts erzielt, die den oben genannten Anforderungen entspricht.

## Patentansprüche

1. Lichtleiterelement (10), welches sich entlang einer Längsrichtung (L) erstreckt und dazu ausgebildet ist, Licht, welches an einer eine Lichteinkoppelfläche (12) bildenden Schmalseite des Lichtleiterelements (10) in dieses eingekoppelt wird, über eine senkrecht zur Lichteinkoppelfläche (12) ausgerichtete Flachseite (11), welche eine Lichtabstrahlfläche des Lichtleiterelements (10) bildet, abzugeben,
wobei an einer der Lichtabstrahlfläche (11) gegenüberliegenden Rückseite (15) des Lichtleiterelements (10) Auskoppelstrukturen (30) ausgebildet sind, welche auftreffendes Licht derart umlenken, dass dieses die Lichtabstrahlfläche (11) bezüglich einer Ebene (E), welche senkrecht zur Lichtabstrahlfläche (11) und vorzugsweise parallel zur Längsrichtung (L) ausgerichtet ist, mit einer asymmetrischen Lichtverteilung verlässt,
wobei die Lichtauskoppelstrukturen (30) durch Ausnehmungen (31) gebildet sind, **dadurch gekennzeichnet,**
**dass** die Lichtauskoppelstrukturen (30) entlang der Längsrichtung (L) des Lichtleiterelements (10) hintereinander verteilt ausgebildet sind,
wobei die Ausnehmungen (31) eine Kegelform, welche gegenüber der Ebene (E), bezüglich der die asymmetrische Lichtverteilung vorliegt, geneigt ist, aufweisen, und wobei eine der Lichteinkoppelfläche (12) gegenüberliegende Längsseite (13) dazu ausgebildet ist, auftreffendes Licht zu reflektieren.

2. Lichtleiterelement nach einem der vorherigen Ansprüche,
**dadurch gekennzeichnet,**
**dass** eine Umlenkung des Lichts durch die Auskoppelstrukturen (30) mittels Totalreflexion erfolgt.

3. Lichtleiterelement nach einem der vorherigen Ansprüche,
**dadurch gekennzeichnet,**
**dass** die Lichtaustrittsfläche (11) eben ist.

4. Lichtleiterelement nach einem der vorherigen Ansprüche,
**dadurch gekennzeichnet,**
**dass** dieses eine längliche, quaderförmige Grundform aufweist.

5. Anordnung zur Lichtabgabe bzw. Leuchte (100) mit einem Lichtleiterelement (10) nach einem der vorherigen Ansprüche sowie Mitteln zur Lichterzeugung, welche Licht an einer Lichteinkoppelfläche (12) des Lichtleiterelements (10) in dieses einkoppeln.

6. Anordnung zur Lichtabgabe nach Anspruch 5,
**dadurch gekennzeichnet,**
**dass** die Mittel zur Lichterzeugung LEDs (21) aufweisen.

## Claims

1. Light guide element (10), which extends along a longitudinal direction (L) and is designed to emit light, which is coupled into the light guide element at a narrow side of said light guide element (10) that forms a light in-coupling surface (12), via a flat side (11) which is oriented perpendicular to the light in-coupling surface (12) and forms a light emitting surface of the light guide element (10),
wherein, on a rear side (15) of the light guide element (10) opposite to the light emitting surface (11), outcoupling structures (30) are formed, which deflect incident light such that said light leaves the light emitting surface (11) with an asymmetrical light distribution relative to a plane (E) which is oriented perpendicularly to the light emitting surface (11) and preferably in parallel to the longitudinal direction (L),
wherein the light outcoupling structures (30) are formed by recesses (31),
**characterized in that**
the light outcoupling structures (30) are one behind the other distributed along the longitudinal direction (L) of the light guide element (10), wherein the recesses (31) have a conical shape, which is inclined with respect to the plane (E) relative to which the asymmetrical light distribution exists, and wherein a longitudinal side (13) opposite to the light in-coupling surface (12) is designed to reflect incident light.

2. Light guide element according to any one of the preceding claims,
**characterized in that**
the light is deflected by the outcoupling structures (30) by means of total reflection.

3. Light guide element according to any one of the preceding claims,
**characterized in that**
the light exit surface (11) is flat.

4. Light guide element according to any one of the preceding claims,
**characterized in that**
said light guide element has an elongated, cuboidal basic shape.

5. Arrangement for emitting light or lamp (100) comprising a light guide element (10) according to any one of the preceding claims as well as means for producing light which couple light into the light guide element at a light in-coupling surface (12) of said light guide element (10).

6. Arrangement for emitting light according to Claim 5,
**characterized in that**
the means for producing light comprise LEDs (21).

## Revendications

1. Élément conducteur optique (10) s'étendant selon une direction longitudinale (L) et étant formé pour émettre de la lumière qui est couplée à une face étroite de l'élément conducteur optique (10) formant une surface de couplage à la lumière (12) dans ce dernier, par l'intermédiaire d'une face plane (11) orientée perpendiculairement à la surface de couplage à la lumière (12) et qui forme une surface photoréfléchissante de l'élément conducteur optique (10), dans lequel des structures de découplage (30) sont formées sur une face arrière (15) de l'élément conducteur optique (10) opposée à la surface photoréfléchissante (11), lesquelles dévient la lumière incidente de manière qu'elle quitte la surface photoréfléchissante (11) avec une répartition asymétrique de la lumière par rapport à un plan (E) orienté perpendiculairement à la surface photoréfléchissante (11) et de préférence parallèlement à la direction longitudinale (L),
dans lequel les structures de découplage de la lumière (30) sont formées par des évidements (31),
**caractérisé en ce que**
les structures de découplage de la lumière (30) sont formées réparties les unes derrière les autres le long de la direction longitudinale (L) de l'élément conducteur optique (10), dans lequel les évidements (31) présentent une forme de cône qui est inclinée par rapport au plan (E) par rapport auquel la lumière est répartie asymétriquement et dans lequel une face longitudinale (13) opposée à la surface de couplage de la lumière (12) est formée pour réfléchir la lumière incidente.

2. Élément de conducteur optique selon l'une quelconque des revendications précédentes,
**caractérisé en ce que**
les structures de découplage (30) dévient la lumière au moyen d'une réflexion totale.

3. Élément de conducteur optique selon l'une quelconque des revendications précédentes,
**caractérisée en ce que**
la surface de sortie de la lumière (11) est plane.

4. Élément de conducteur optique selon l'une quelconque des revendications précédentes,
**caractérisée en ce qu'il**
présente une forme fondamentale allongée et parallélépipédique.

5. Structure d'émission de lumière ou luminaire (100) comprenant un élément conducteur optique (10) selon l'une quelconque des revendications précédentes ainsi que des moyens de génération de lumière qui couplent la lumière à une surface de couplage de la lumière (12) de l'élément conducteur optique (10) dans ce dernier.

6. Structure d'émission de lumière selon la revendication 5,
**caractérisée en ce que**
les moyens de génération de lumière comportent des DEL (21).
